# EUROPÄISCHE PATENTSCHRIFT

(11) **EP 3 558 776 B1**
(45) Veröffentlichungstag und Bekanntmachung des Hinweises auf die Patenterteilung: **31.03.2021**
(21) Anmeldenummer: 17786915.3
(22) Anmeldetag: 19.10.2017
(51) Int. Cl.: B60T 17/04, F15B 13/08

(54) **HYDRAULIKBLOCK FÜR EIN HYDRAULIKAGGREGAT EINER SCHLUPFREGELUNG EINER HYDRAULISCHEN FAHRZEUGBREMSANLAGE**
HYDRAULIC BLOCK FOR A HYDRAULIC ASSEMBLY OF A SLIP CONTROL SYSTEM OF A HYDRAULIC VEHICLE BRAKE SYSTEM
BLOC HYDRAULIQUE POUR UN GROUPE HYDRAULIQUE D'UNE RÉGULATION ANTIPATINAGE D'UN SYSTÈME DE FREINAGE HYDRAULIQUE D'UN VÉHICULE

(30) Priorität: 21.12.2016 DE 102016225761
(43) Veröffentlichungstag der Anmeldung: 30.10.2019
(73) Patentinhaber: Robert Bosch GmbH, 70442 Stuttgart (DE)
(72) Erfinder: ZANDER, Thomas, 88085 Langenargen (DE); LOEFFLER, Michael, 87534 Oberstaufen (DE)
(86) Internationale Anmeldenummer: PCT/EP2017/076709
(87) Internationale Veröffentlichungsnummer: WO 2018/114090

(56) Entgegenhaltungen:
- DE-A1-102010 040 868
- DE-A1-102012 223 059
- DE-A1-102013 209 727
- DE-A1-102014 207 545
- DE-A1-102014 208 871
- DE-A1-102014 212 385
- DE-A1-102014 213 732
- DE-A1-102015 205 543

## Beschreibung

Die Erfindung betrifft einen Hydraulikblock für ein Hydraulikaggregat einer Schlupfregelung einer hydraulischen Fahrzeugbremsanlage mit den Merkmalen des Oberbegriffs des Anspruchs 1.

Schlupfregelungen sind beispielsweise Blockierschutz-, Antriebsschlupf- und/oder Fahrdynamikregelungen/elektronische Stabilitätsprogramme, für die die Abkürzungen ABS, ASR, FDR/ESP gebräuchlich sind. Solche Schlupfregelungen hydraulischer Fahrzeugbremsanlagen sind von Personenkraftwagen und Krafträdern bekannt und werden hier nicht näher erläutert.

### Stand der Technik

Kernstück solcher Schlupfregelungen ist ein Hydraulikaggregat, das einen Hydraulikblock aufweist, der mit hydraulischen Bauelementen der Schlupfregelung bestückt und durch Bremsleitungen an einen Hauptbremszylinder angeschlossen ist und an den durch Bremsleitungen eine oder mehrere hydraulische Radbremsen angeschlossen sind. Hydraulische Bauelemente sind unter anderem Magnetventile, Hydropumpen (meistens Kolbenpumpen), Rückschlagventile, Hydrospeicher, Dämpferkammern und Drucksensoren. Der Hydraulikblock ist typischerweise ein quaderförmiger Metallblock, der zu einer mechanischen Befestigung und hydraulischen Verschaltung der hydraulischen Bauelemente der Schlupfregelung dient. Verschaltung meint eine hydraulische Verbindung der hydraulischen Bauelemente entsprechend einem hydraulischen Schaltplan der Schlupfregelung.

Der Hydraulikblock weist Aufnahmen für die hydraulischen Bauelemente der Schlupfregelung auf. Dabei handelt es sich üblicherweise um zylindrische, meist durchmessergestufte Ansenkungen, Sack- oder Durchgangslöcher, die im Hydraulikblock angebracht sind und in die die hydraulischen Bauelemente vollständig oder teilweise eingebracht, beispielsweise eingepresst sind. Beispielsweise sind Hydropumpen üblicherweise vollständig in ihre Aufnahmen in einem Hydraulikblock eingebracht, wogegen bei Magnetventilen üblicherweise nur ein hydraulischer Teil in eine Aufnahme eines Hydraulikblocks eingebracht ist und ein elektromagnetischer Teil des Magnetventils aus dem Hydraulikblock vorsteht. Durch eine normalerweise kartesische Verbohrung des Hydraulikblocks sind die Aufnahmen entsprechend dem hydraulischen Schaltplan der Schlupfregelung miteinander verbunden. Kartesisch verbohrt bedeutet parallel oder rechtwinklig zueinander und zu Flächen und Kanten des Hydraulikblocks im Hydraulikblock angebrachte Bohrungen. Bestückt mit den hydraulischen Bauelementen bildet der Hydraulikblock ein Hydraulikaggregat.

Zu einer Verbindung des Hydraulikblocks mit einem Hauptbremszylinder und zur Verbindung hydraulischer Radbremsen mit dem Hydraulikblock weisen bekannte Hydraulikblöcke Anschlüsse für Bremsleitungen auf. Die Anschlüsse sind typischerweise zylindrische Ansenkungen bzw. Sacklöcher, die beispielsweise Innengewinde für eine Schraubverbindung mit einem Schraubnippel einer Bremsleitung aufweisen oder gewindelos zum Einpressen und Verstemmen eines Einpressnippels einer Bremsleitung vorzugsweise in sog. self-clinch Technik sind. Self-clinch bedeutet, dass sich der Einpressnippel beim Einpressen in den Anschluss des Hydraulikblocks unter plastischer Umformung von Material des Hydraulikblocks selbst druckdicht im Anschluss des Hydraulikblocks verstemmt.

Als der Erfindung am nächsten kommender Stand der Technik wird der in der DE 10 2015 205543 A1 offenbarte Gegenstand angesehen. Dabei handelt es sich um einen Hydraulikblock für ein Hydraulikaggregat einer Schlupfregelung einer hydraulischen Fahrzeugbremsanlage, mit einer Ventilseite, die Aufnahmen für Magnetventile aufweist.

Der Erfindungsgegenstand weist mindestens eine Aufnahme für einen Hydrospeicher an einer der Ventilseite gegenüberliegenden Speicherseite auf. Dadurch wird die Störanfälligkeit eines Hydraulikblocks verbessert, ohne dass dafür Einbußen bei Raumbedarf oder bei Kosten für den Hydraulikblock in Kauf zu nehmen sind.

Darüber hinaus offenbart die Offenlegungsschrift DE 10 2006 059 924 A1 einen Hydraulikblock für ein Hydraulikaggregat einer Schlupfregelung einer hydraulischen Fahrzeugbremsanlage, bei dem alle Aufnahmen für Magnetventile der Schlupfregelung in einer Deckseite, die auch als Ventilseite bezeichnet werden kann, eines quaderförmigen Hydraulikblocks angeordnet sind. Die Deckseite ist eine der beiden großen Seiten des quaderförmigen Hydraulikblocks, der nicht würfelförmig ist, sondern länger und breiter als dick. Die Deckseite kann quadratisch oder rechteckig sein.

Anschlüsse für Bremsleitungen, die zu hydraulischen Radbremsen führen, sind bei dem bekannten Hydraulikblock in einer Querseite angebracht, die auch als Anschlußseite bezeichnet werden kann. Die Anschlußseite grenzt an die Ventilseite an. Aufnahmen für Hydrospeicher sind in einer der Anschlußseite gegenüberliegenden Querseite des bekannten Hydraulikblocks angeordnet, die ebenfalls an die Ventilseite angrenzt.

### Offenbarung der Erfindung

Der erfindungsgemäße Hydraulikblock mit den Merkmalen des Oberbegriffs des Anspruchs 1 ist für ein Hydraulikaggregat einer Schlupfregelung einer hydraulischen Fahrzeugbremsanlage vorgesehen. Der insbesondere quaderförmige Hydraulikblock weist Aufnahmen für Magnetventile der Schlupfregelung an einer Seite auf, die hier als Ventilseite bezeichnet wird. Die Ventilseite ist insbesondere eine der beiden großen Seiten des Hydraulikblocks. An einer der Ventilseite gegenüberliegenden Seite weist der erfindungsgemäße Hydraulikblock mindestens eine Aufnahme für einen Hydrospeicher auf. Insbesondere weist der Hydraulikblock einen oder auch mehrere Hydrospeicher für jeden Bremskreis auf. Der mindestens eine Hydrospeicher kann versenkt, teilweise versenkt und teilweise vorstehend oder auch vollständig vorstehend am Hydraulikblock angeordnet werden.

Ein Vorteil der Erfindung ist eine Entlüftbarkeit oder einfachere Entlüftbarkeit des mindestens einen Hydrospeichers bei stehend angeordnetem Hydraulikblock, wenn der mindestens eine Hydrospeicher den Ventilen gegenüber am oder im Hydrauliklock angeordnet ist. Stehend angeordnet meint mit senkrechter Ventilseite, was eine typische Einbaulage eines Hydraulikblocks in einem Motorraum eines Kraftwagens ist.

Ein weiterer Vorteil der Erfindung ist die Möglichkeit, die mindestens eine Aufnahme für einen Hydrospeicher so anzuordnen, dass sie gemäß Anspruch 2 senkrecht zur Ventilseite gesehen eine oder mehrere der gegnüberliegenden Aufnahmen für Magnetventile, nämlich für Auslassventile der Schlupfregelung überdeckt. Ein Auslassventil einer Schlupfregelung verbindet eine Radbremse mit einem Hydrospeicher. Durch eine Verbohrung des Hydraulikblocks ist also eine Aufnahme für ein Auslassventil mit einem Anschluß für eine Radbremse verbunden.

Bei einer senkrecht zur Ventilseite gesehen mindestens eine Aufnahme für ein Auslassventil überdeckenden Anordnung einer Aufnahme für einen Hydrospeicher im Hydraulikblock lässt sich gemäß Anspruch 3 die mindestens eine Aufnahme für einen Hydrospeicher durch eine kurze Bohrung senkrecht zur Ventilseite mit einer oder mehreren der Aufnahmen für ein Auslassventil bzw. Auslassventile verbinden. Die Bohrung ist Teil der Verbohrung des Hydraulikblocks. Dadurch egibt sich eine kurze Anbindung des mindestens einen Hydrospeichers an mindestens ein Auslassventil und ein kurzer Entlüftungsweg.

Durch Einlassventile und die Auslassventile sind Radbremsen an die Schlupfregelung angeschlossen. Die Einlassventile und die Auslassventile bilden Radbremsdruckmodulationsventilanordnungen, mit denen sich für eine Schlupfregelung Radbremsdrücke in den Radbremsen radindividuell regeln lassen. Eine Aufnahme für ein Einlassventil ist wie eine Aufnahme für ein Auslassventil durch die Verbohrung des Hydraulikblocks mit einem Anschluß für eine Radbremse verbunden.

Die Unteransprüche haben vorteilhafte Ausgestaltungen und Weiterbildungen der im Anspruch 1 angegebenen Erfindung zum Gegenstand.

Die Aufnahmen für die Magnetventile sind vorzugsweise in Reihen parallel zu einer Anschlußseite des Hydraulikblocks angeordnet, die mindestens einen Anschluß für einen Hauptbremszylinder oder eine Radbremse aufweist (Anspruch 6). Dabei sind insbesondere Aufnahmen gleicher Magnetventile in jeweils einer Reihe angeordnet, also die Aufnahmen für die Einlassventile in einer Reihe und die Aufnahmen für die Auslassventile in einer anderen Reihe.

Der Anspruch 5 vertauscht die Reihe mit den Aufnahmen für die Einlassventile mit der Reihe für die Auslassventile gegenüber einer üblichen Anordnung: es befinden sich die Aufnahmen für die Auslassventile in einer ersten Reihe nahe an der Anschlußseite mit den Anschlüssen für den Hauptbremszylinder oder die Radbremsen und die Einlaßventile in einer zweiten Reihe weiter weg von der Anschlußseite des Hydraulkblocks.

Anders als im Stand der Technik sind Hydropumpen der Schlupfregelung vorzugsweise nicht in einem mittleren Bereich des Hydraulikblocks sondern nahe einer der Anschlußseite gegenüberliegenden Querseite im Hydraulikblock vorgesehen (Ansprüche 7 und 8). Ein Elektromotor zum Antrieb der Hydropumpen wird vorzugsweise nicht der Ventilseite gegenüber sondern an der der Anschlußseite gegenüberliegenden und an die Ventilseite angrenzenden Querseite des Hydraulikblocks angebracht.

Unter einer Bohrung ist ein Durchgangsloch oder ein Sackloch unabhängig von der Art seiner Herstellung zu verstehen. Eine Bohrung muss also nicht durch Bohren, sondern kann beispielsweise durch Fräsen oder in sonstiger Weise hergestellt sein.

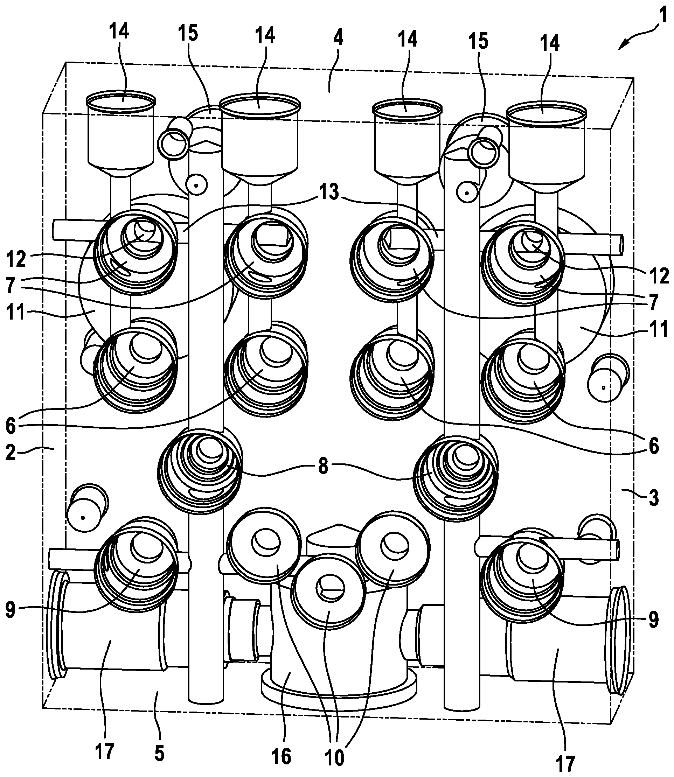

### Kurze Beschreibung der Zeichnung

Die Erfindung wird nachfolgend anhand einer in der Zeichnung dargestellten Ausführungsform näher erläutert. Die einzige Figur zeigt einen erfindungsgemäßen Hydraulikblock in einer perspektivischen Darstellung. Der Hydraulikblock ist durchsichtig gezeichnet um seine Verbohrung zu zeigen, die teilweise dargestellt ist.

### Ausführungsform der Erfindung

Der durchsichtig gezeichnete, erfindungsgemäße Hydraulikblock 1 ist für ein Hydraulikaggregat einer Schlupfregelung einer im Übrigen nicht dargestellten hydraulischen Fahrzeugbremsanlage vorgesehen. Solche Schlupfregelungen sind beispielsweise Blockierschutz-, Antriebsschlupf- und/oder Fahrdynamikregelungen/elektronische Stabilitätsprogramme, für die die Abkürzungen ABS, ASR, FDR/ESP gebräuchlich sind. Der Hydraulikblock 1 ist ein quaderförmiger Metallblock. Er weist eine rechteckige Grundseite und eine kongruente, der Grundseite gegenüberliegende Deckseite, die hier als Speicherseite und als Ventilseite 2 bezeichnet werden, zwei einander gegenüberliegende Längsseiten 3 und zwei einander ebenfalls gegenüberliegende Querseiten, die hier als Anschlußseite 4 und als Motorseite 5 bezeichnet werden, auf. Die Speicherseite und die Ventilseite 2 sind die beiden großen Seiten des Hydraulikblocks 1. Die Längsseiten 3 müssen nicht länger als die Querseiten sein.

Der Hydraulikblock 1 ist für eine Fahrzeugbremsanlage mit einem nicht dargestellten Zweikreis-Hauptbremszylinder und vier hydraulischen Radbremsen vorgesehen, die ebenfalls nicht gezeichnet sind. Die Fahrzeugbremsanlage weist zwei Bremskreise mit je zwei Radbremsen auf.

In der Ventilseite 2 weist der Hydraulikblock 1 Aufnahmen 6, 7, 8, 9 für nicht gezeichnete Magnetventile der Schlupfregelung auf, und zwar vier Aufnahmen 6 für Einlassventile und vier Aufnahmen 7 für Auslassventile. Des weiteren weist der Hydraulikblock 1 zwei Aufnahmen 8 für Ansaugventile und zwei Aufnahmen 9 für Trennventile in der Ventilseite 2 und Aufnahmen 10 für Drucksensoren auf. Die vier Aufnahmen 7 für die Auslassventile sind in einer ersten Reihe parallel zu der Anschlussseite 4 und die vier Aufnahmen 6 für die Einlassventile in einer zweiten Reihe ebenfalls parallel zu der Anschlussseite 4 in der Ventilseite 2 des Hydraulikblocks 1 angebracht. Die erste Reihe mit den Aufnahmen 7 für die Auslassventile befindet sich nahe der Anschlußseite 4 des Hydraulikblocks 1 bzw. jedenfalls näher an der Anschlußseite 4 als die zweite Reihe mit den Aufnahmen 6 für die Einlassventile, die sich auf einer der Anschlußseite 4 des Hydraulikblocks 1 abgewandten Seite der ersten Reihe mit den Aufnahmen 7 für die Auslassventile befindet. Die Aufnahmen 8 für die Ansaugventile, die Aufnahmen 9 für die Trennventile und die Aufnahmen 10 für die Drucksensoren sind zwischen der zweiten Reihe mit den Aufnahmen 6 für die Einlassventile und der Motorseite 5 in der Ventilseite 2 des Hydraulikblocks 1 angebracht.

Die Aufnahmen 6, 7, 8, 9 für die Magnetventile sind zylindrische, durchmessergestufte Ansenkungen im Hydraulikblock 1, in die die nicht dargestellten Magnetventile der Schlupfregelung in sogenannter self-clinch Technik eingepresst werden. Das bedeutet, dass die Magnetventile beim Einpressen Material des Hydraulikblocks 1 plastisch so verformen, dass sie mechanisch gehalten und druckdicht in den Aufnahmen 6, 7, 8, 9 abgedichtet sind. Die Aufnahmen 10 für die Drucksensoren sind niedrige zylindrische Ansenkungen, in die die nicht dargestellten Drucksensoren eingesetzt und druckdicht verstemmt werden.

In der Speicherseite, die der Ventilseite 2 gegenüber liegt und in der Zeichnung dem Betrachter abgewandt ist, weist der Hydraulikblock 1 zwei zylindrische Ansenkungen als Aufnahmen 11 für Hydrospeicher auf. Die Aufnahmen 11 für die Hydrospeicher weisen einen größeren Durchmesser auf und sind tiefer als die Aufnahmen 6, 7, 8, 9 für die Magnetventile. Form und Größe sind nicht zwingend für die Aufnahmen 11. Die Aufnahmen 11 für die Hydrospeicher sind so angeordnet, dass sie senkrecht zu der Ventilseite 2 und der Speicherseite gesehen mindestens jeweils eine Aufnahme 7 für die Auslassventile überdecken. In der dargestellten und beschriebenen Ausführungsform der Erfindung überdecken die Aufnahmen 11 für die Hydrospeicher äußere, d. h. den Längsseiten 3 des Hydraulikblocks 1 nähere Aufnahmen 7 für Auslassventile. Durch Bohrungen 12 senkrecht zu der Ventilseite 2 und der Speicherseite sind ist jede der beiden Aufnahmen 11 für einen Hydrospeicher mit einer Aufnahme 7 für ein Auslassventil verbunden. Die beiden anderen Aufnahmen 7 für Auslassventile sind durch Bohrungen 13 parallel zur Ventilseite 2 zur Anschlußseite 4 des Hydraulikblocks 1 mit den äußeren Aufnahmen 7 für Auslassventile und dadurch ebenfalls jeweils mit einer Aufnahme 11 für einen Hydrospeicher 11 verbunden.

In der an die Ventilseite 2 angrenzenden Anschlussseite 4 des Hydraulikblocks 1 sind vier Anschlüsse 14 für die nicht gezeichneten hydraulischen Radbremsen in einer Reihe nebeneinander angebracht. Nahe der Anschlussseite 4 sind in der Speicherseite zwei Anschlüsse 15 für den ebenfalls nicht gezeichneten Zweikreis-Hauptbremszylinder angebracht. Die Anschlüsse 14, 15 sind zylindrische Ansenkungen mit beispielsweise Innengewinden zu einem Schraubanschluss von Bremsleitungen mit Schraubnippeln oder ohne Innengewinde für einen Anschluss von Bremsleitungen durch Verstemmen von Einpressnippeln. Das Verstemmen kann in sog. Self-Clinch Technik mit Einpressnippeln erfolgen, die Material des Hydraulikblocks 1 beim Einpressen der Einpressnippel in die Anschlussbohrungen 14, 15 so umformen, dass die Einpressnippel mechanisch gehalten und druckfest in den Anschlüssen 14, 15 abgedichtet sind.

In der Motorseite 5, die der Anschlussseite 4 gegenüber liegt, weist der Hydraulikblock 1 in seiner Längsmitte einen Exzenterraum 16 auf, der in der gezeichneten Ausführungsform der Erfindung eine zylindrische, durchmessergestufte Ansenkung ist, deren Durchmesser größer und die tiefer als die Aufnahmen 6, 7, 8, 9 für die Magnetventile ist. Der Exzenterraum 16 ist zum Einbau und zu einer Drehlagerung eines nicht gezeichneten Pumpenexzenters zum Antrieb zweier Kolbenpumpen als Hydropumpen der Schlupfregelung der nicht gezeichneten hydraulischen Fahrzeugbremsanlage vorgesehen. Angetrieben wird der Pumpenexzenter mit einem nicht gezeichneten Elektromotor als Pumpenmotor gegebenenfalls unter Zwischenschaltung eines mechanischen Untersetzungsgetriebes. Der nicht gezeichnete Elektromotor wird außen an der Motorseite 5 befestigt.

Radial zum Exzenterraum 16 und gleichachsig einander gegenüber sind zwei Aufnahmen 17 für Kolbenpumpen als Hydropumpen der Schlupfregelung im Hydraulikblock 1 angebracht, die an den beiden Längsseiten 3 münden. Die Aufnahmen 17 für die Kolbenpumpen sind zylindrische, durchmessergestufte Löcher, die von den Längsseiten 3 zum Exzenterraum 16 durchgehen. Sie sind zum Einbau nicht dargestellter Kolbenpumpen als Hydropumpen der Schlupfregelung der nicht dargestellten hydraulischen Fahrzeugbremsanlage vorgesehen. In einer Längsrichtung des Hydraulikblocks 1 gesehen befinden sich die Aufnahmen 17 für die Kolbenpumpen zwischen den Aufnahmen 6, 7 für die Einlassventile und die Auslassventile und der Motorseite 5 bzw. zwischen den Aufnahmen 6, 7 ,8, 9 für die Magnetventile und der Motorseite 5.

Der Hydraulikblock 1 ist symmetrisch zu einer Längsmittelebene verbohrt, das heißt die Aufnahmen 6, 7, 8, 9, 10, 11, für die Magnetventile, die Drucksensoren und die Hydrospeicher der Schlupfregelung, die Aufnahmen 17 für die Kolbenpumpen und der Exzenterraum 16, die Anschlüsse 14, 15 für die Radbremsen und den Hauptbremszylinder und die Aufnahmen verbindende Bohrungen 12, 13 sind spiegelsymmetrisch zur Längsmittelebene im Hydraulikblock 1 angebracht. Die Längsmittelebene befindet sich in einer Mitte zwischen den beiden Längsseiten 3. Einzelne Abweichungen von der Symmetrie sind nicht ausgeschlossen.

Bestückt mit den nicht dargestellten Magnetventilen, Drucksensoren, Hydrospeichern und Kolbenpumpen und weiteren hydraulischen Bauelementen einer Schlupfregelung einer nicht dargestellten hydraulischen Fahrzeugbremsanlage bildet der Hydraulikblock 1 ein Hydraulikaggregat, das Kernstück eines hydraulischen Teils der Schlupfregelung ist. Der Hydraulkblock 1 ist stehend gezeichnet, d. h. die Anschlußseite 4 befindet sich oben und die Motorseite 5 unten und die Ventilseite 2 und die Speicherseite sind vertikal. Das ist auch eine vorgesehene Einbau- und Gebrauchs- bzw. Betriebslage des mit den hydraulischen Bauelementen der Schlupfregelung bestückten Hydraulkblocks 1.

## Patentansprüche

1. Hydraulikblock für ein Hydraulikaggregat einer Schlupfregelung einer hydraulische Fahrzeugbremsanlage, mit einer Ventilseite (2), die Aufnahmen (6, 7) für Magnetventile aufweist, **dadurch gekennzeichnet, dass** der Hydraulikblock (1) mindestens eine Aufnahme (11) für einen Hydrospeicher an einer der Ventilseite (2) gegenüberliegenden Speicherseite aufweist.

2. Hydraulikblock nach Anspruch 1, **dadurch gekennzeichnet, dass** senkrecht zu der Ventilseite (2) bzw. zu der Speicherseite gesehen die mindestens eine Aufnahme (11) für den Hydrospeicher mindestens eine Aufnahme (7) für ein Auslassventil überdeckt.

3. Hydraulikblock nach Anspruch 2, **dadurch gekennzeichnet, dass** eine zu der Ventilseite (2) bzw. zu der Speicherseite senkrechte Bohrung (12) im Hydraulikblock (1) die mindestens eine Aufnahme (11) für den Hydrospeicher mit einer Aufnahme (7) für ein Auslassventil verbindet.

4. Hydraulikblock nach Anspruch 1, **dadurch gekennzeichnet, dass** der Hydraulilblock (1) eine Anschlußseite (4) aufweist, die an die Ventilseite (2) angrenzt und an der der Hydraulikblock (1) mindestens einen Anschluß (14, 15) für einen Hauptbremszylinder oder eine hydraulische Radbremse aufweist,

5. Hydraulikblock nach Anspruch 4, **dadurch gekennzeichnet, dass** sich eine Aufnahme (7) für ein Auslassventil zwischen der Anschlußseite (4) und einer Aufnahme (6) für ein Einlassventil befindet.

6. Hydraulikblock nach Anspruch 4, **dadurch gekennzeichnet, dass** Aufnahmen (6, 7) für die Magnetventile in zu der Anschlußseite (6) parallelen Reihen angeordnet sind.

7. Hydraulikblock nach Anspruch 4, **dadurch gekennzeichnet, dass** der Hydraulikblock (1) einen Exzenterraum (16) für einen Pumpenexzenter zum Antrieb einer Hydropumpe in einer der Anschlußseite (4) gegenüberliegenden Motorseite (5) aufweist.

8. Hydraulikblock nach Anspruch 4, **dadurch gekennzeichnet, dass** der Hydraulikblock (1) mindestens eine Aufnahme (17) für eine Hydropumpe zwischen den Aufnahmen (6, 7) für Magnetventile und einer der Anschlußseite (4) gegenüberliegenden Motorseite (5) aufweist.

## Claims

1. Hydraulic block for a hydraulic assembly of a slip control system of a hydraulic vehicle brake system, having a valve side (2), which has receptacles (6, 7) for solenoid valves, **characterized in that** the hydraulic block (1) has at least one receptacle (11) for a hydraulic accumulator on an accumulator side opposite the valve side (2).

2. Hydraulic block according to Claim 1, **characterized in that,** as seen perpendicularly to the valve side (2) or to the accumulator side, the at least one receptacle (11) for the hydraulic accumulator covers at least one receptacle (7) for an outlet valve.

3. Hydraulic block according to Claim 2, **characterized in that** a bore (12) in the hydraulic block (1) connects the at least one receptacle (11) for the hydraulic accumulator to a receptacle (7) for an outlet valve, which bore is perpendicular to the valve side (2) or to the accumulator side.

4. Hydraulic block according to Claim 1, **characterized in that** the hydraulic block (1) has a connection side (4), which adjoins the valve side (2) and on which the hydraulic block (1) has at least one connection (14, 15) for a master brake cylinder or a hydraulic wheel brake.

5. Hydraulic block according to Claim 4, **characterized in that** a receptacle (7) for an outlet valve is located between the connection side (4) and a receptacle (6) for an inlet valve.

6. Hydraulic block according to Claim 4, **characterized in that** receptacles (6, 7) for the solenoid valves are arranged in rows parallel to the connection side (6).

7. Hydraulic block according to Claim 4, **characterized in that** the hydraulic block (1) has an eccentric chamber (16) for a pump eccentric for driving a hydraulic pump in a motor side (5) opposite the connection side (4).

8. Hydraulic block according to Claim 4, **characterized in that** the hydraulic block (1) has at least one receptacle (17) for a hydraulic pump between the receptacles (6, 7) for solenoid valves and a motor side (5) opposite the connection side (4).

## Revendications

1. Bloc hydraulique pour un groupe hydraulique d'une régulation antipatinage d'un système de freinage hydraulique de véhicule, comprenant un côté vanne (2) qui présente des logements (6, 7) pour des électrovannes, **caractérisé en ce que** le bloc hydraulique (1) présente au moins un logement (11) pour un accumulateur hydraulique sur un côté accumulateur opposé au côté vanne (2).

2. Bloc hydraulique selon la revendication 1, **caractérisé en ce que** perpendiculairement au côté vanne (2), ou vu vers le côté accumulateur, ledit au moins un logement (11) pour l'accumulateur hydraulique recouvre au moins un logement (7) pour une vanne de sortie.

3. Bloc hydraulique selon la revendication 2, **caractérisé en ce qu'**un alésage (12), perpendiculaire au côté vanne (2) ou au côté accumulateur, dans le bloc hydraulique (1) relie ledit au moins un logement (11) pour l'accumulateur hydraulique à un logement (7) pour une vanne de sortie.

4. Bloc hydraulique selon la revendication 1, **caractérisé en ce que** le bloc hydraulique (1) présente un côté raccordement (4) adjacent au côté vanne (2), et sur lequel le bloc hydraulique (1) présente au moins un raccordement (14, 15) pour un maître-cylindre de frein ou un frein de roue hydraulique.

5. Bloc hydraulique selon la revendication 4, **caractérisé en ce qu'**un logement (7) pour une vanne de sortie se trouve entre le côté raccordement (4) et un logement (6) pour une vanne d'entrée.

6. Bloc hydraulique selon la revendication 4, **caractérisé en ce que** des logements (6, 7) pour les électrovannes sont disposés en rangées parallèles au côté raccordement (6).

7. Bloc hydraulique selon la revendication 4, **caractérisé en ce que** le bloc hydraulique (1) présente un espace excentrique (16) pour un excentrique de pompe pour l'entraînement d'une pompe hydraulique sur un côté moteur (5) opposé au côté raccordement (4).

8. Bloc hydraulique selon la revendication 4, **caractérisé en ce que** le bloc hydraulique (1) présente au moins un logement (17) pour une pompe hydraulique entre les logements (6, 7) pour des électrovannes et un côté moteur (5) opposé au côté raccordement (4).
